# EUROPEAN PATENT APPLICATION

(11) **EP 4 693 053 A1**
(43) Date of publication of application: **11.02.2026**
(21) Application number: 24858111.8
(22) Date of filing: 16.07.2024
(51) Int. Cl.: G06F 12/06

(54) **MEMORY PROCESSING METHOD, ELECTRONIC DEVICE AND READABLE STORAGE MEDIUM**

(30) Priority: 29.08.2023 CN 202311103138; 07.09.2023 CN 202311160306
(71) Applicant: Huawei Technologies Co., Ltd., Shenzhen, Guangdong 518129 (CN)
(72) Inventor: SONG, Yuanzheng, Shenzhen, Guangdong 518129 (CN); WANG, Chengke, Shenzhen, Guangdong 518129 (CN); JI, Kecheng, Shenzhen, Guangdong 518129 (CN); LIN, Haiming, Shenzhen, Guangdong 518129 (CN); LI, Xuhui, Shenzhen, Guangdong 518129 (CN)
(74) Representative: MERH-IP Matias Erny Reichl Hoffmann Patentanwälte PartG mbB
(86) International application number: PCT/CN2024/105776
(87) International publication number: WO 2025/044567

(57) **Abstract**

Embodiments of this application provide a memory processing method, an electronic device, and a readable storage medium. In the method, in a scenario in which an application program and a hardware device share a first physical memory, when the application program is switched to a background, the application program sends a first command to a memory processing apparatus, where the first command indicates to release the first physical memory of the application program; and the memory processing apparatus releases the first physical memory in response to the first command. In embodiments of this application, when the application program is switched to the background, and temporarily does not need to use the first physical memory, the application program may actively request to release the first physical memory, to increase an available memory of an electronic device.

## Description

This application claims priorities to Chinese Patent Application No. 202311103138.X, filed with the China National Intellectual Property Administration on August 29, 2023 and entitled "MEMORY PROCESSING METHOD, ELECTRONIC DEVICE, AND READABLE STORAGE MEDIUM", and to Chinese Patent Application No. 202311160306.9, filed with the China National Intellectual Property Administration on September 7, 2023 and entitled "MEMORY PROCESSING METHOD, ELECTRONIC DEVICE, AND READABLE STORAGE MEDIUM", both of which are incorporated herein by reference in their entireties.

### TECHNICAL FIELD

Embodiments of this application relate to the field of computer technologies, and in particular, to a memory processing method, an electronic device, and a readable storage medium.

### BACKGROUND

A virtual memory (virtual memory) technology is a memory management technology that may cause an application process and a hardware device in an electronic device to consider that the application process and the hardware device have continuous available memories. However, actually, these memories may be scattered in physical memories. The virtual memory technology can implement efficient memory usage and application process isolation.

Currently, in a scenario in which the application process and the hardware device share a physical memory, if the application process does not release the physical memory, the physical memory is permanently occupied by the application process, and the physical memory cannot be reclaimed even when a memory of the electronic device is insufficient. As such a situation becomes more frequent, an available memory of the electronic device decreases.

### SUMMARY

Embodiments of this application provide a memory processing method, an electronic device, and a readable storage medium. In a scenario in which an application process and a hardware device share a physical memory, an application program may actively request to reclaim the physical memory, to increase an available memory of an electronic device.

According to a first aspect, an embodiment of this application provides a memory processing method, applied to a memory processing apparatus. In the method, an application program and a hardware device may share a first physical memory. When the application program does not need to use the first physical memory, for example, when the application program is switched to a background, the application program may send a first command to the memory processing apparatus. Correspondingly, the memory processing apparatus may receive the first command from the application program, where the first command indicates to release the first physical memory of the application program. The memory processing apparatus may release the first physical memory in response to the first command.

In embodiments of this application, when the application program is switched to the background, and temporarily does not need to use the first physical memory, the application program may actively request to release the first physical memory, to increase an available memory of an electronic device.

In a possible implementation, a first page table includes a mapping relationship between a first physical address and a first virtual address, a second page table includes a mapping relationship between the first physical address and a second virtual address, the first physical address is a physical address of the first physical memory, the first virtual address is a virtual address in a virtual address space of the application program, and the second virtual address is a virtual address in a virtual address space of the hardware device.

Before releasing the first physical memory, the method further includes: modifying the first physical address to which the first virtual address is mapped in the first page table; and modifying the first physical address to which the second virtual address is mapped in the second page table.

In a possible implementation, modifying the first physical address to which the first virtual address is mapped in the first page table includes: modifying the first physical address to a preset physical address; and modifying the first physical address to which the second virtual address is mapped in the second page table includes: modifying the first physical address to the preset physical address.

In this implementation, when the application program is switched to the background, a memory reclamation driver module may remove the mapping relationship between the first physical address and the first virtual address and the mapping relationship between the first physical address and the second virtual address, to avoid a problem that the application program switched to the background and the hardware device can still access the first physical memory after a physical memory management module releases the first physical memory, thereby improving data security.

In a possible implementation, a service driver in a kernel space may also access the first physical memory. A third page table includes a mapping relationship between the first physical address and a third virtual address. The third virtual address is a virtual address of the service driver in the kernel space. Before releasing the first physical memory, the memory processing apparatus may further modify the first physical address to which the third virtual address is mapped in the third page table.

In this implementation, when the application program is switched to the background, the memory reclamation driver module may remove the mapping relationship between the first physical address and the third virtual address, to avoid a problem that the service driver in the kernel space can still access the first physical memory after the physical memory management module releases the first physical memory, thereby improving data security.

In a possible implementation, when the application program starts to be switched from the background to a foreground, the application program needs to continue to use the shared physical memory with the hardware device, to continue to perform a service. When starting to be switched from the background to the foreground, the application program may send a fourth command to the memory processing apparatus, where the fourth command indicates to reallocate a same physical memory to the application program and the hardware device. Correspondingly, the memory processing apparatus may receive the fourth command from the application program, and the memory processing apparatus may allocate a same second physical memory to the application program and the hardware device in response to the fourth command, where a physical address of the second physical memory is a second physical address. A size of the second physical memory is the same as a size of the first physical memory.

The memory processing apparatus may modify the physical address to which the first virtual address is mapped in the first page table to the second physical address, and modify the physical address to which the second virtual address is mapped in the second page table to the second physical address.

In a possible implementation, the memory processing apparatus may modify the physical address to which the third virtual address is mapped in the third page table to the second physical address.

In this implementation, when starting to be switched from the background to the foreground, the application program may request the memory processing apparatus to reallocate the shared second physical memory to the application program and the hardware device. The memory processing apparatus may allocate the shared second physical memory to the application program and the hardware device, and the memory processing apparatus may modify the first page table to establish a mapping relationship between the first virtual address and the second physical address, modify the third page table to establish a mapping relationship between the third virtual address and the second physical address, and modify the second page table to establish a mapping relationship between the second virtual address and the second physical address. In this way, the application program, the hardware device, and the kernel space can continue to access data associated with a target service in the second physical memory, and the application program can continue to perform the target service. The memory processing method provided in this embodiment of this application does not affect service execution of the application program.

In a possible implementation, the first command includes an identifier of the first physical memory. The identifier of the first physical memory indicates the first physical memory, so that the memory processing apparatus can determine the first physical memory based on the identifier of the first physical memory.

In a possible implementation, the identifier of the first physical memory is an identifier of a buffer configured to record information about the first physical memory. After allocating the shared first physical memory to the application program and the hardware device, the memory processing apparatus may further store, in the buffer, the first virtual address of the application program, the second virtual address of the hardware device, and the third virtual address of the kernel space that are mapped to the first physical memory.

In a possible implementation, the memory processing apparatus includes a memory reclamation driver module and a physical memory management module. The following describes, based on more detailed interaction between modules, the memory processing method provided in this embodiment of this application.

That the memory processing apparatus receives the first command from the application program includes: The memory reclamation driver module receives the first command from the application program.

That the memory processing apparatus releases the first physical memory includes: The memory reclamation driver module sends a second command to the physical memory management module, where the second command indicates to release the first physical memory. The physical memory management module may release the first physical memory in response to the second command.

In a possible implementation, the memory processing apparatus further includes an input/output memory management unit IOMMU driver, and the buffer is further configured to record the first virtual address and the second virtual address that are mapped to the first physical memory.

In response to the first command, the memory reclamation driver module may query, based on the identifier of the buffer, the buffer corresponding to the identifier, obtain the first virtual address and the second virtual address that are mapped to the first physical memory, and modify the first physical address to which the first virtual address is mapped in the first page table.

The memory reclamation driver module may send a third command to the IOMMU driver, where the third command indicates to modify the first physical address to which the second virtual address is mapped in the second page table. The IOMMU driver may modify, in response to the third command, the first physical address to which the second virtual address is mapped in the second page table.

In a possible implementation, in response to the first command, the memory reclamation driver module may query, based on the identifier of the buffer, the buffer corresponding to the identifier, obtain the third virtual address mapped to the first physical memory, and modify the first physical address to which the third virtual address is mapped in the third page table.

In this embodiment of this application, based on interaction between the memory reclamation driver module, the physical memory management module, and the IOMMU driver in the memory processing module, the first physical memory shared by the application program and the hardware device can be reclaimed, thereby increasing an available physical memory of the electronic device.

In a possible implementation, correspondingly, that the memory processing apparatus receives the fourth command from the application program includes: The memory reclamation driver module receives the fourth command from the application program. That the memory reclamation driver module may allocate the same second physical memory to the application program and the hardware device in response to the fourth command includes: The memory reclamation driver module sends a fifth command to the physical memory management module, where the fifth command indicates to allocate a same physical memory to the application program and the hardware device.

In response to the fifth command, the physical memory management module allocates the same second physical memory to the application program and the hardware device, and the physical memory management module sends the second physical address of the second physical memory to the memory reclamation driver module.

After the memory reclamation driver module receives the second physical address of the second physical memory from the physical memory management module, the memory reclamation driver module modifies the physical address to which the first virtual address is mapped in the first page table to the second physical address. In addition, the memory reclamation driver module modifies the physical address to which the third virtual address is mapped in the third page table to the second physical address.

In addition, the memory reclamation driver module sends a sixth command to the IOMMU driver, where the sixth command indicates to modify the physical address to which the second virtual address is mapped in the second page table to the second physical address. In response to the sixth command, the IOMMU driver modifies the physical address to which the second virtual address is mapped in the second page table to the second physical address.

In a possible implementation, the memory processing apparatus is located in the kernel space of the electronic device.

In this embodiment of this application, based on interaction between the memory reclamation driver module, the physical memory management module, and the IOMMU driver in the memory processing module, when the application program is switched to the foreground, the shared second physical memory may be reallocated to the application program and the hardware device, to ensure that the application program smoothly performs a service.

According to a second aspect, an embodiment of this application provides a memory processing method. An electronic device includes an application program and a memory processing apparatus, and the method includes: When the application program is switched to a background, the application program sends a first command to the memory processing apparatus, where the first command indicates to release a first physical memory of the application program, and the application program and a hardware device share the first physical memory; and the memory processing apparatus releases the first physical memory in response to the first command.

In a possible implementation, a first page table includes a mapping relationship between a first physical address and a first virtual address, a second page table includes a mapping relationship between the first physical address and a second virtual address, the first physical address is a physical address of the first physical memory, the first virtual address is a virtual address in a virtual address space of the application program, and the second virtual address is a virtual address in a virtual address space of the hardware device.

Before the memory processing apparatus releases the first physical memory, the method further includes: The memory processing apparatus modifies the first physical address to which the first virtual address is mapped in the first page table, and modifies the first physical address to which the second virtual address is mapped in the second page table.

In a possible implementation, the method further includes: When the application program starts to be switched from the background to a foreground, the application program sends a fourth command to the memory processing apparatus, where the fourth command indicates to reallocate a shared physical memory to the application program and the hardware device; the memory processing apparatus allocates a shared second physical memory to the application program and the hardware device, where a physical address of the second physical memory is a second physical address; and the memory processing apparatus modifies the physical address to which the first virtual address is mapped in the first page table to the second physical address, and modifies the physical address to which the second virtual address is mapped in the second page table to the second physical address.

In a possible implementation, a third page table includes a mapping relationship between the first physical address and a third virtual address, the third virtual address is a virtual address of a service driver in a kernel space, and before the memory processing apparatus releases the first physical memory, the method further includes: The memory processing apparatus modifies the first physical address to which the third virtual address is mapped in the third page table.

After the memory processing apparatus allocates the shared second physical memory to the application program and the hardware device, the method further includes: The memory processing apparatus modifies the physical address to which the third virtual address is mapped in the third page table to the second physical address.

In a possible implementation, the first command includes an identifier of the first physical memory.

In a possible implementation, the identifier of the first physical memory is an identifier of a buffer configured to record information about the first physical memory.

In a possible implementation, the buffer is further configured to record the first virtual address and the second virtual address that are mapped to the first physical memory.

That the memory processing apparatus modifies the first physical address to which the first virtual address is mapped in the first page table, and modifies the first physical address to which the second virtual address is mapped in the second page table includes: The memory processing apparatus obtains, based on the identifier of the buffer, the first virtual address and the second virtual address that are mapped to the first physical memory; and the memory processing apparatus modifies the first physical address to which the first virtual address is mapped in the first page table, and modifies the first physical address to which the second virtual address is mapped in the second page table.

That the memory processing apparatus modifies the first physical address to which the third virtual address is mapped in the third page table includes: The memory processing apparatus obtains, based on the identifier of the buffer, the third virtual address mapped to the first physical memory; and the memory processing apparatus modifies the first physical address to which the third virtual address is mapped in the third page table.

In a possible implementation, the memory processing apparatus may include a memory reclamation driver module, a physical memory management module, and an IOMMU driver, configured to implement steps of the memory processing apparatus. For the steps performed by the memory reclamation driver module, the physical memory management module, and the IOMMU driver, refer to the descriptions in the first aspect.

In a possible implementation, the application program is located in a user space of the electronic device, and the memory processing apparatus is located in the kernel space of the electronic device.

According to a third aspect, an embodiment of this application provides a memory processing apparatus, including a module configured to perform the method according to the first aspect.

According to a fourth aspect, an embodiment of this application provides an electronic device, including an application program and the memory processing apparatus according to the second aspect.

According to a fifth aspect, an embodiment of this application provides an electronic device. The electronic device may include a processor and a memory. The memory is configured to store computer-executable program code, the program code includes instructions, and when the processor executes the instructions, the instructions enable the electronic device to perform the method according to the first aspect.

According to a sixth aspect, an embodiment of this application provides a computer program product including instructions. When the computer program product runs on a computer, the computer is enabled to perform the method according to the first aspect.

According to a seventh aspect, an embodiment of this application provides a computer-readable storage medium. The computer-readable storage medium stores instructions, and when the instructions are run on a computer, the computer is enabled to perform the method according to the first aspect.

According to an eighth aspect, an embodiment of this application provides a communication apparatus (chip), including a processor and a communication interface. The processor performs the method according to the first aspect by using the communication interface.

For beneficial effects of the possible implementations of the second aspect to the eighth aspect, refer to the beneficial effects brought by the first aspect. Details are not described herein again.

### BRIEF DESCRIPTION OF DRAWINGS

FIG. 1 is a diagram of a structure of an electronic device according to an embodiment of this application;
FIG. 2 is a diagram of a mapping relationship between a virtual address and a physical address;
FIG. 3A is a diagram of another structure of an electronic device according to an embodiment of this application;
FIG. 3B is a diagram in which an ION driver allocates a shared physical memory to an application program and video decoding hardware according to an embodiment of this application;
FIG. 3C is a diagram in which an application program, an encoding and decoding service, an encoding and decoding driver, and an IOMMU driver perform memory mapping on a shared physical memory according to an embodiment of this application;
FIG. 3D is a diagram in which an application program and video decoding hardware access a shared physical memory according to an embodiment of this application;
FIG. 4A is a schematic flowchart of an embodiment of a memory processing method according to an embodiment of this application;
FIG. 4B is a schematic flowchart of another embodiment of a memory processing method according to an embodiment of this application;
FIG. 5 is a schematic flowchart of another embodiment of a memory processing method according to an embodiment of this application;
FIG. 6A and FIG. 6B are a schematic flowchart of another embodiment of a memory processing method according to an embodiment of this application;
FIG. 7 is a schematic flowchart of another embodiment of a memory processing method according to an embodiment of this application; and
FIG. 8 is a diagram of another structure of an electronic device according to an embodiment of this application.

### DESCRIPTION OF EMBODIMENTS

For ease of understanding, the following first describes related terms and concepts in embodiments of this application.

An electronic device in embodiments of this application may be referred to as user equipment (user equipment, UE), a terminal (terminal), or the like. For example, the electronic device may be a mobile phone, a tablet computer (portable Android device, PAD), a personal digital assistant (personal digital assistant, PDA), a handheld device having a wireless communication function, a computing device, a vehicle-mounted device or a wearable device, a virtual reality (virtual reality, VR) terminal device, an augmented reality (augmented reality, AR) terminal device, a wireless terminal in industrial control (industrial control), a wireless terminal in a smart home (smart home), or the like. A form of the electronic device is not specifically limited in embodiments of this application.

Application process: When running an application program, an electronic device may create a process of the application program. The application program may run in the process, and the process may be referred to as an application process. The application program may be understood as a program for completing one or more specific tasks on the electronic device. In some embodiments, the application program may include a program of application software (application, APP), a program of system software, a program of a system service, and the like. This is not limited in embodiments of this application. In some embodiments, the application process may be referred to as a process for short.

Physical memory (physical memory): is a memory that actually exists in an electronic device. For example, the physical memory may include a random access memory (random access memory, RAM).

Physical address (physical address): A physical memory may include at least one storage unit, and the physical address may include an address of each storage unit.

In an early memory allocation mechanism, an electronic device runs an application program, an operating system (operating system, OS) may write an executable file and related data of the application program into a physical memory, and the application program directly runs in the physical memory, that is, a memory address accessed by the application program is an actual physical address. When a computer runs a plurality of application programs at the same time, it needs to be ensured that a total amount of physical memories used by these application programs is less than a size of a total physical memory of the electronic device. It is assumed that the size of the physical memory of the electronic device is 128M, two application programs A and B run at the same time currently, A needs to occupy a memory of 10M, and B needs to occupy a memory of 110M. When allocating the physical memory to the application programs, the electronic device uses the following method: first allocating first 10M in the physical memory to A, and then allocating 110M in the remaining 118M to B. This allocation method can ensure that both A and B can run. However, this simple memory allocation policy has the following problems.
1. Processes of the application programs are not isolated. Because the application program directly accesses the physical memory, the application program may randomly access data of another application program in the physical memory, resulting in a data security risk. For example, a malicious program may randomly modify data of another application program in the physical memory, to achieve a purpose of destruction.
2. Usage efficiency of the physical memory is low. For example, when both A and B run, if the electronic device further runs an application program C, and C needs a physical memory of 20M for running, because only a space of the remaining 8M is available in this case, the electronic device needs to select one of running application programs, temporarily copy data of the application program to a hard disk to release a partial space for C to use, and then write data of C into the memory for running. In this process, a large amount of data is copied and written, resulting in low efficiency.

To resolve the foregoing problems, a virtual memory (virtual memory) technology emerges. Briefly, an intermediate layer such as a virtual memory is created in an electronic device, and an application program may access a physical memory by using an indirect address access method. According to this method, a memory address accessed by the application program is no longer an actual physical memory address, but is a virtual address. When the electronic device runs the application program, an operating system may allocate an independent virtual address space (virtual address space) to a process of each application program. Virtual address spaces of different processes are independent of each other and do not overlap each other, and a process cannot access a virtual address space of another process. Therefore, isolation between processes of different application programs and data security of different application programs can be ensured. The virtual address space of the process may be considered as a virtual space allocated by the operating system to the process.

A size of the virtual address space depends on a hardware architecture and the operating system of the electronic device. For example, in a 32-bit operating system, an addressing range of a pointer is 2³². For example, a size of a virtual address space allocated by the operating system to each process may be 3 GB, and a virtual memory address range of the process may be 0x0000 0000 to 0xFFFF FFFF. For example, in a 64-bit operating system, a size of a virtual address space of a process may reach a level of TB or larger. In some embodiments, a virtual memory address may be understood as an address of a virtual memory, and may be referred to as a virtual address for short.

However, when the electronic device executes an application program, the application program needs to run in a real physical memory. Therefore, after the operating system allocates the independent virtual address space to the process of each application program, a mapping between a virtual address in the virtual address space and a physical address may be established. In this way, according to a mapping mechanism, when the application program accesses a virtual address in the virtual address space, the virtual address may be mapped to a physical address, to access the physical address.

To improve utilization of a physical memory, a paging mechanism may be used to manage the physical memory currently. A basic method of the paging mechanism is that a virtual memory is divided into units of a fixed size, which are referred to as pages (page). The size of the page depends on an operating system. For example, the size of the page may be 4 KB. The physical memory is also divided into units of a same size, which are referred to as page frames (page frame). A page in the virtual memory corresponds to a page frame in the physical memory.

The following describes the paging mechanism by describing a process of storing data by an application program.

After the application program is started, an operating system first creates a virtual address space for the application program. In a running process, the application program may request a physical memory from the operating system, and the physical memory is used to store data generated by the application program in the running process. The operating system may allocate the physical memory to the application program in response to the request of the application program. The operating system may allocate an idle page frame to the application program, map the idle page frame to a page, and establish a mapping relationship between a physical address and a virtual address. The operating system may add the mapping relationship between a virtual address and a physical address to a page table (page table).

The page table may store the mapping relationship between a virtual address and a physical address. Each application program may correspond to one page table. The page table stores a mapping relationship between a virtual address and a physical address that are allocated by the operating system to a process of the application program. The operating system is responsible for managing and maintaining the page table.

When the application program needs to access data stored in a physical memory, the application program may access the page table, and translate a virtual address into a physical address. Based on the physical address, the application program can directly access the data in the physical memory.

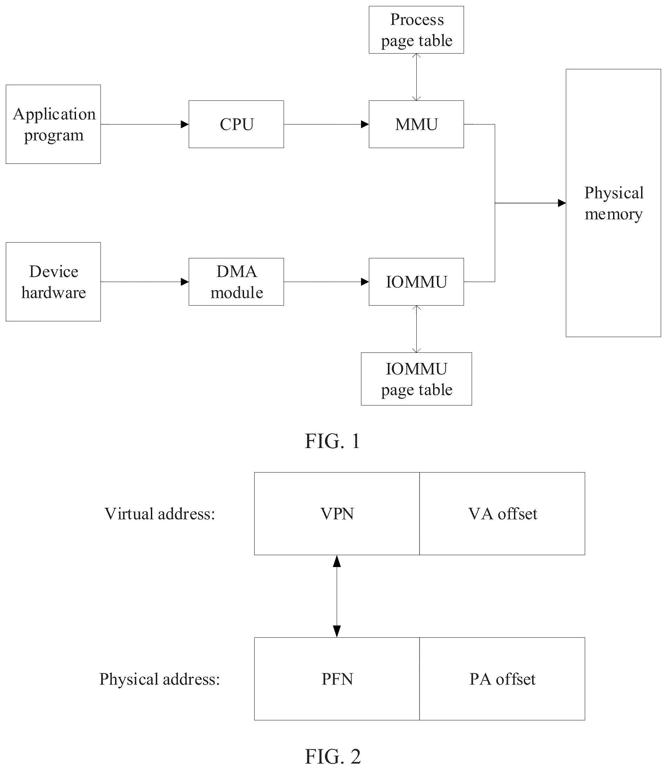

FIG. 1 is a diagram of a structure of an electronic device according to an embodiment of this application. Refer to FIG. 1. The electronic device may include: an application program, a hardware device, a central processing unit (central processing unit, CPU), a direct memory access (direct memory access, DMA) module, a memory management unit (memory management unit, MMU), an input/output memory management unit (input/output memory management unit, IOMMU), and a physical memory.

Refer to the foregoing related descriptions. When the application program runs, an operating system (not shown in FIG. 1) on the electronic device may allocate a physical memory to a process of the application program, establish a mapping relationship between a physical address of the physical memory and a virtual address, and add the mapping relationship between the virtual address and the physical address to a page table. In some embodiments, the page table used to store the mapping relationship between the virtual address of the process and the physical address may be referred to as a process page table. In some embodiments, the process page table may also be referred to as a first page table.

The process page table is stored in the physical memory. When the application program accesses a virtual address, the CPU may query the process page table to query a physical address to which the virtual address is mapped, and then access the physical address. In some embodiments, that the CPU queries the physical address to which the virtual address is mapped may be understood as "translating the virtual address into the physical address".

In some embodiments, the MMU may be configured to query the process page table, and perform a step of translating the virtual address of the process into the physical address. When the application program accesses a virtual address, the MMU may query the process page table, and translate the virtual address into a physical address, so that the application program accesses the physical address. In some embodiments, the MMU may be integrated into the CPU or disposed independently of the CPU. In FIG. 1, an example in which the MMU is disposed independently of the CPU is used.

In some embodiments, the MMU may include a translation lookaside buffer (translation lookaside buffer, TLB), and the TLB is configured to store a recently used mapping relationship between a virtual address and a physical address. When the MMU performs a step of translating a virtual address into a physical address, the MMU first checks whether a corresponding mapping relationship exists in the TLB. If no corresponding mapping relationship exists in the TLB, the MMU may query the process page table in the physical memory. In this way, the MMU does not frequently access the process page table in the physical memory, thereby enhancing address translation efficiency.

In some embodiments, a virtual page number (virtual page number, VPN) is used to represent a page in a virtual address space, and a physical frame number (physical frame number, PFN) is used to represent a page frame in the physical memory. Refer to FIG. 2. A virtual address allocated by the operating system to the application program may include a VPN and a virtual address offset (VA offset), and a physical address allocated by the operating system to the application program includes a PFN and a physical address offset (PA offset).

In some embodiments, the mapping relationship between the virtual address of the process and the physical address may include a mapping relationship between a VPN and a PFN. Correspondingly, the process page table may store the mapping relationship between the VPN and the PFN. In this example, when the MMU performs a step of translating a virtual address into a physical address, the MMU may search, based on a VPN in the virtual address, the process page table for a PFN to which the VPN is mapped, and then add the PFN and a VA offset to obtain the physical address, so that translation from the virtual address into the physical address can be implemented.

The hardware device may be understood as another hardware device in the electronic device other than the CPU and the physical memory. The hardware device may include but is not limited to video decoding hardware, an audio player, a camera, a communication chip, a network adapter, or the like.

Similar to the application program, each hardware device may have an independent virtual address space of the hardware device. For example, the operating system may allocate a virtual address space to the hardware device, the IOMMU establishes a mapping relationship between a virtual address of the hardware device and a physical address, and the IOMMU adds the mapping relationship between the virtual address of the hardware device and the physical address to a page table. In some embodiments, the page table used to store the mapping relationship between the virtual address of the hardware device and the physical address may be referred to as an IOMMU page table or a hardware device page table. In some embodiments, the IOMMU page table may also be referred to as a second page table.

For the mapping relationship between the virtual address and the physical address that is stored in the IOMMU page table, refer to the related descriptions of the process page table.

In some embodiments, when the hardware device accesses a virtual address, the DMA module may query the IOMMU page table, and translate the virtual address into a physical address, so that the hardware device accesses the physical address.

In some embodiments, the IOMMU in the electronic device may be configured to query the IOMMU page table, and perform a step of translating the virtual address of the hardware device into the physical address. When the hardware device accesses a virtual address, the IOMMU may query the IOMMU page table, and translate the virtual address into a physical address, so that the hardware device accesses the physical address.

In some embodiments, to reduce content copying and improve service efficiency, the application program and the hardware device in the electronic device may share at least one physical memory.

For example, in a video decoding scenario, the operating system may allocate a same physical memory 1 to the application program and the video decoding hardware, that is, the application program and the video decoding hardware may share the physical memory 1. The operating system may further establish a mapping relationship between a virtual address 1 of a process of the application program and a physical address 1 of the physical memory 1, and the IOMMU may establish a mapping relationship between a virtual address 2 of the video decoding hardware and the physical address 1. The mapping relationship between the virtual address 1 of the process of the application program and the physical address 1 may be stored in the first page table, and the mapping relationship between the virtual address 2 of the video decoding hardware and the physical address 1 may be stored in the second page table.

In some embodiments, the physical memory 1 may store to-be-decoded video data and decoded data. For example, in a video decoding process, when the application program accesses the physical memory 1, the MMU may translate the virtual address 1 into the physical address 1, and the application program may write to-be-decoded video data into the physical memory 1. When the video decoding hardware accesses the physical memory 1, the IOMMU may translate the virtual address 2 into the physical address 1, and the video decoding hardware may decode the to-be-decoded video data in the physical memory 1, and write decoded data into the physical memory 1. Similarly, the application program may access the physical memory 1 again, the MMU may translate the virtual address 1 into the physical address 1, and the application program may read the decoded data in the physical memory 1, and play a video based on the decoded data.

The application program and the hardware device share the physical memory, so that content copying can be reduced and service efficiency can be improved. For example, if the application program and the video decoding hardware do not share the physical memory 1, for example, the operating system allocates the physical memory 1 to the application program and allocates a physical memory 2 to the video decoding hardware, in a video decoding process, to-be-decoded video data in the physical memory 1 needs to be copied to the physical memory 2, so that the video decoding hardware can read the to-be-decoded video data in the physical memory 2. After the video decoding hardware decodes the to-be-decoded video data to obtain decoded data, the decoded data further needs to be copied to the physical memory 1, so that the application program can read the decoded data in the physical memory 1 to play a video. In a scenario in which the application program and the hardware device do not share the physical memory, content is copied a large quantity of times, reducing service efficiency. A memory processing method provided in embodiments of this application is applicable to a scenario in which the application program and the hardware device share the physical memory.

It should be understood that the scenario in which the application program and the hardware device share the physical memory is not limited to a video decoding scenario, and may be further applicable to the following scenario: One of the application program and the hardware device writes data into the shared physical memory, and the other reads data from the shared physical memory. Alternatively, both the application program and the hardware device read data from or write data into the shared physical memory. It should be understood that, in embodiments of this application, a quantity of times that the application program and the hardware device write data into or read data from the shared physical memory is not limited.

Currently, in a scenario in which the application program and the hardware device share the physical memory, if the application program does not actively release the physical memory, the physical memory is permanently occupied by the application program, and the physical memory cannot be reclaimed even when a memory of the electronic device is insufficient. As such a situation becomes more frequent, an available memory of the electronic device decreases.

For example, in a scenario in which the application program and the video decoding hardware share the physical memory, for example, the application program may play a video by using a media player service (media player service) at a system layer of the electronic device. When the application program is switched to a background, the media player service is not destructed currently. Therefore, the application program does not actively release the shared physical memory. This causes difficulty in reclaiming the physical memory.

To resolve the foregoing problem, embodiments of this application provide a memory processing method. In a scenario in which an application program and a hardware device share a physical memory, when the application program is switched to a background and temporarily does not need to use the physical memory, the physical memory shared by the application program and the hardware device may be released, to increase an available memory of an electronic device. The released physical memory may be allocated to another service for use, thereby improving memory usage. When the application program is switched to a foreground and needs to use the physical memory, the shared physical memory may be reallocated to the application program and the hardware device, and a first page table and a second page table are modified, to ensure smooth service execution.

Before the memory processing method provided in embodiments of this application is described, a structure of the electronic device is first described.

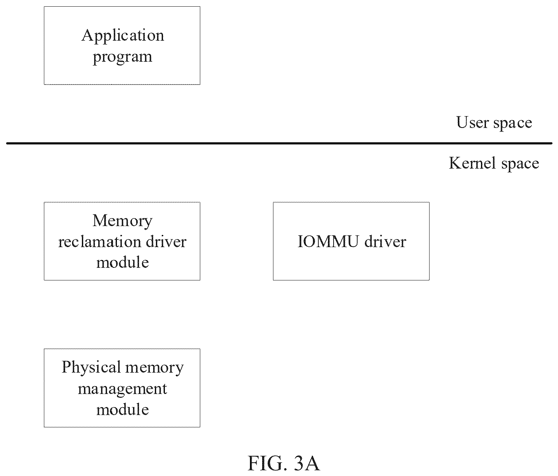

FIG. 3A is a diagram of another structure of an electronic device according to an embodiment of this application. Refer to FIG. 3A. The electronic device may include an application program, a memory reclamation driver module, an IOMMU driver, and a physical memory management module. It should be understood that the memory processing method provided in embodiments of this application is applicable to a scenario in which the application program and a hardware device share a physical memory. Because the memory processing method provided in embodiments of this application does not relate to an action performed by the hardware device, FIG. 3A does not show the hardware device.

In some embodiments, the structure shown in FIG. 3A imposes no limitation on the structure of the electronic device, and the electronic device may alternatively include more or fewer modules. In some embodiments, the memory reclamation driver module, the IOMMU driver, and the physical memory management module shown in FIG. 3A may be integrated. For example, a memory processing apparatus may include the memory reclamation driver module, the IOMMU driver, and the physical memory management module. The memory processing apparatus may perform actions of the memory reclamation driver module, the IOMMU driver, and the physical memory management module in the following embodiments. In some embodiments, the memory reclamation driver module and the IOMMU driver shown in FIG. 3A may be integrated, and an integrated module may be configured to perform actions of the memory reclamation driver module and the IOMMU driver in the following embodiments. This is not limited in embodiments of this application. In the following embodiments, an example in which the memory reclamation driver module, the IOMMU driver, and the physical memory management module are independently disposed is used for description.

The electronic device may include a user space and a kernel space. The application program is in the user space, and the memory reclamation driver module, the IOMMU driver, and the physical memory management module are in the kernel space.

In some embodiments, an interface may be configured for the kernel space, and the application program may invoke the interface to interact with a module in the kernel space. For example, the kernel space may provide an input/output control (input/output control, ioctl) interface for a process of the application program, and the application program may invoke the ioctl interface to interact with the memory reclamation driver module.

In embodiments of this application, in a scenario in which the application program and the hardware device share a physical memory, the application program may actively request the memory reclamation driver module to trigger release of a partial physical memory occupied by the application program. After the partial physical memory is released, the application program may also actively request the memory reclamation driver module to reallocate a physical memory to the application program.

In response to the request of the application program, the memory reclamation driver module may trigger the physical memory management module to release the partial physical memory occupied by the application program, and trigger the physical memory management module to reallocate a shared physical memory to the application program and the hardware device.

In some embodiments, the memory reclamation driver module is further configured to manage a first page table. The IOMMU driver is configured to manage a second page table.

In some embodiments, in a scenario in which the application program and the hardware device share a physical memory, an operating system may allocate the shared physical memory to the application program and the hardware device, establish a mapping relationship between a virtual address of the application program and a physical address, and establish a mapping relationship between a virtual address of the hardware device and the physical address.

In embodiments of this application, to facilitate distinguishing between the virtual address of the process of the application program that is mapped to the physical memory and the virtual address of the hardware device that is mapped to the physical memory, in some embodiments, the virtual address of the process of the application program that is mapped to the physical memory may be used as a first virtual address, and the virtual address of the hardware device that is mapped to the physical memory may be used as a second virtual address. In other words, the first page table may store a mapping relationship between the physical address of the physical memory and the first virtual address, and the second page table may store a mapping relationship between the physical address of the physical memory and the second virtual address.

For specific functions of the application program, the memory reclamation driver module, the IOMMU driver, and the physical memory management module, refer to descriptions in the following embodiments.

In some embodiments, the kernel space may use a DMA-BUF framework. Correspondingly, the memory reclamation driver module may be a DMA-BUF memory reclamation driver module, and the physical memory management module may be a DMA-BUF memory management module or an ION driver (driver).

The DMA-BUF memory management module is configured to allocate a shared physical memory to the application program and the hardware device.

To better understand the memory processing method provided in embodiments of this application, a video decoding scenario is used as an example and "the kernel space uses the DMA-BUF framework" is used as an example herein to briefly describe a process in which the DMA-BUF memory management module allocates a same physical memory to the application program and the hardware device (such as video decoding hardware).

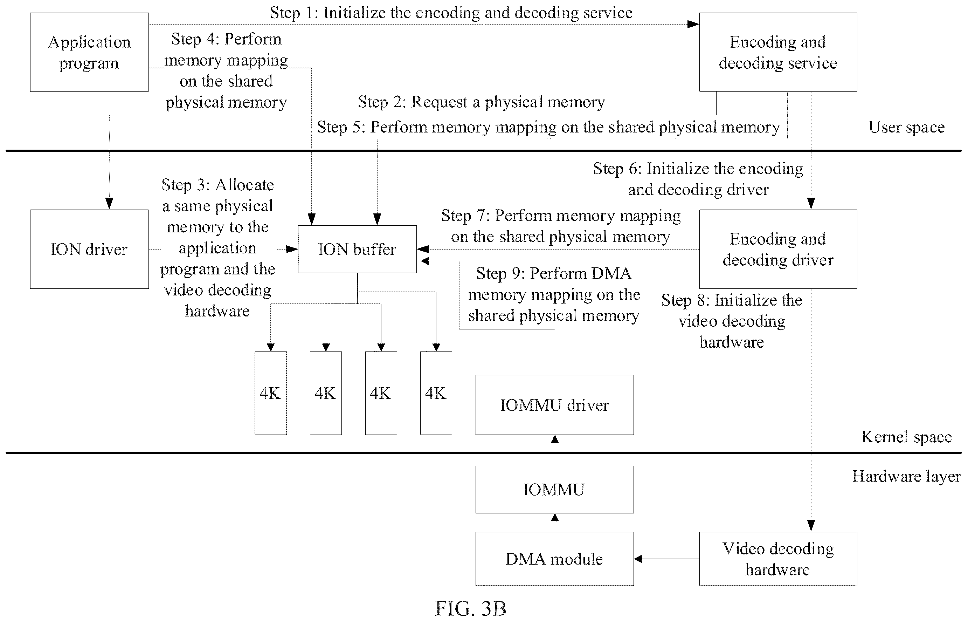

Refer to FIG. 3B. An electronic device may include a user space, a kernel space, and a hardware layer. Refer to FIG. 3B. The user space includes an application program and an encoding and decoding service, and the kernel space includes a memory management module, an IOMMU driver, and an encoding and decoding driver. The hardware layer includes an IOMMU, a DMA module, and video decoding hardware. For example, in FIG. 3B, an example in which the memory management module is an ION driver is used.

With reference to the structure of the electronic device shown in FIG. 3B, the following first describes a process in which the ION driver allocates a same physical memory to the application program and the video decoding hardware.

Step 1: The application program invokes the encoding and decoding service to enable initialization of the encoding and decoding service.

The application program may trigger initialization of the encoding and decoding service by invoking the encoding and decoding service.

Step 2: The encoding and decoding service requests a physical memory from the ION driver.

In some embodiments, that the encoding and decoding service requests the physical memory from the ION driver may be considered as that the application program requests the physical memory from the ION driver.

In some embodiments, when the encoding and decoding service requests the physical memory from the ION driver, the encoding and decoding service may send a memory allocation request to the ION driver, where the memory allocation request indicates to allocate a same physical memory to the application program and the video decoding hardware.

Step 3: The ION driver allocates the shared physical memory to the application program and the video decoding hardware.

In response to the memory allocation request from the encoding and decoding service, the ION driver may allocate the same physical memory to the application program and the hardware device, and record information about the physical memory. The information about the physical memory may include but is not limited to: a size of the physical memory, a page frame number corresponding to the physical memory, and the like. It should be understood that in FIG. 3B, a 4K physical page frame is used to represent the physical memory.

In some embodiments, the ION driver may use an ION buffer (buffer) to describe the information about the physical memory. The ION buffer may be considered as a data structure, and the ION buffer is used to record the information about the physical memory. After storing the ION buffer, the ION driver may feed back an identifier of the ION buffer to the application program. The identifier of the ION buffer is used to distinguish between ION buffers corresponding to different physical memories. The identifier of the ION buffer may include but is not limited to information such as a number or an ID. In some embodiments, the identifier of the ION buffer may be, for example, a file descriptor (file descriptor, FD).

In some embodiments, because the ION buffer is used to record the information about the physical memory, the identifier of the ION buffer may be considered as an identifier of the physical memory, and the identifier of the ION buffer may indicate the physical memory.

Step 4: The application program performs memory mapping on the shared physical memory.

In this embodiment of this application, after the ION driver allocates the same physical memory to the application program and the video decoding hardware, the application program may perform memory mapping on the shared physical memory. For example, the application program may map a first virtual address of the application program to the physical memory. Correspondingly, the ION driver may record, in the ION buffer, the first virtual address mapped to the physical memory.

Step 5: The encoding and decoding service performs memory mapping on the shared physical memory.

The encoding and decoding service may perform memory mapping on the shared physical memory. In other words, the encoding and decoding service may map a fourth virtual address of the encoding and decoding service to the physical memory. The fourth virtual address of the encoding and decoding service may be an address in a virtual address space of the encoding and decoding service, and the virtual address space of the encoding and decoding service is allocated by an operating system to the encoding and decoding service. For details, refer to descriptions of allocating a virtual address space by the operating system to the application program.

It should be understood that both the application program and the encoding and decoding service are located in the user space, and a virtual address of a process running in the user space and a physical address may be recorded in a first page table. For example, the first page table may include a mapping relationship between the first virtual address of the application program and a physical address of the physical memory, and a mapping relationship between the fourth virtual address of the encoding and decoding service and the physical address of the physical memory.

In some embodiments, after the encoding and decoding service maps the fourth virtual address of the encoding and decoding service to the physical memory, the ION driver may record, in the ION buffer, the fourth virtual address mapped to the physical memory.

Step 6: The encoding and decoding service invokes an encoding and decoding driver to enable initialization of the encoding and decoding driver.

Step 7: The encoding and decoding driver performs memory mapping on the shared physical memory.

Similarly, the encoding and decoding driver may perform memory mapping on the shared physical memory. In other words, the encoding and decoding driver may map a third virtual address of the kernel space to the physical memory. The third virtual address may be an address in a virtual address space of the kernel space, and the virtual address space is allocated by the operating system to the encoding and decoding driver.

In some embodiments, the encoding and decoding driver is located in the kernel space, and a virtual address of a driver or a service running in the kernel space and a physical address may be recorded in a third page table. In other words, the third page table is used to store a mapping relationship between the virtual address of the driver or the service running in the kernel space and the physical address. For example, the third page table may include a mapping relationship between the third virtual address and the physical address of the physical memory.

In some embodiments, after the encoding and decoding driver maps the third virtual address of the kernel space to the physical memory, the ION driver may record, in the ION buffer, the third virtual address mapped to the physical memory.

Step 8: The encoding and decoding driver invokes the video decoding hardware to enable initialization of the video decoding hardware.

Step 9: The IOMMU driver performs DMA memory mapping on the shared physical memory.

Refer to the descriptions in step 4. Because the shared physical memory is allocated to the application program and the video decoding hardware, similarly, the IOMMU driver may perform DMA memory mapping on the shared physical memory. The IOMMU driver may map a second virtual address of the video decoding hardware to the physical memory. Correspondingly, the ION driver may record, in the ION buffer, the second virtual address mapped to the physical memory.

In this embodiment of this application, the first page table may store the mapping relationship between the first virtual address and the physical address of the physical memory, and the mapping relationship between the fourth virtual address and the physical address of the physical memory. The second page table may store a mapping relationship between the second virtual address and the physical address of the physical memory. The third page table may store the mapping relationship between the third virtual address of the kernel space and the physical address of the physical memory. When the application program accesses the shared physical memory, the MMU may query the first page table, and translate the first virtual address into the physical address, so that the application program accesses the physical memory. Similarly, when the video decoding hardware accesses the physical memory, the IOMMU may query the second page table, and translate the second virtual address into the physical address, so that the video decoding hardware accesses the physical memory. Similarly, when the encoding and decoding driver in the kernel space accesses the physical memory, the third virtual address may be translated into the physical address, so that the encoding and decoding driver in the kernel space accesses the physical memory.

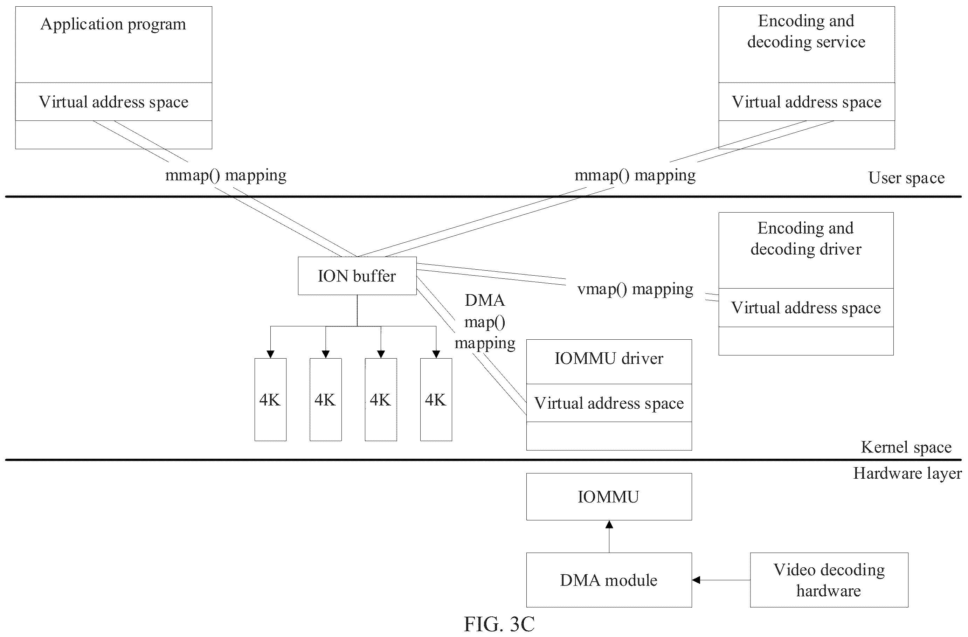

FIG. 3C is a diagram in which an application program, an encoding and decoding service, an encoding and decoding driver, and an IOMMU driver perform memory mapping on a shared physical memory. Refer to FIG. 3C. The application program may perform memory mapping (memory map) on the physical memory, and map a first virtual address of the application program to the physical memory. mmap is short for memory mapping. Similarly, the encoding and decoding service may perform mmap mapping on the physical memory, and may also map a fourth virtual address of the encoding and decoding service to the physical memory.

A vmap technology is to implement virtual memory management by allocating unique "virtual pages" to all page table entries mapped to a kernel space in a virtual memory space. Refer to FIG. 3C. The encoding and decoding driver may perform vmap mapping on the physical memory, and map a third virtual address in the kernel space to the physical memory.

In addition, the IOMMU driver may perform DMA memory mapping on the shared physical memory. For example, the IOMMU driver may map a second virtual address of video decoding hardware to the physical memory. Correspondingly, the ION driver may record, in the ION buffer, the second virtual address mapped to the physical memory.

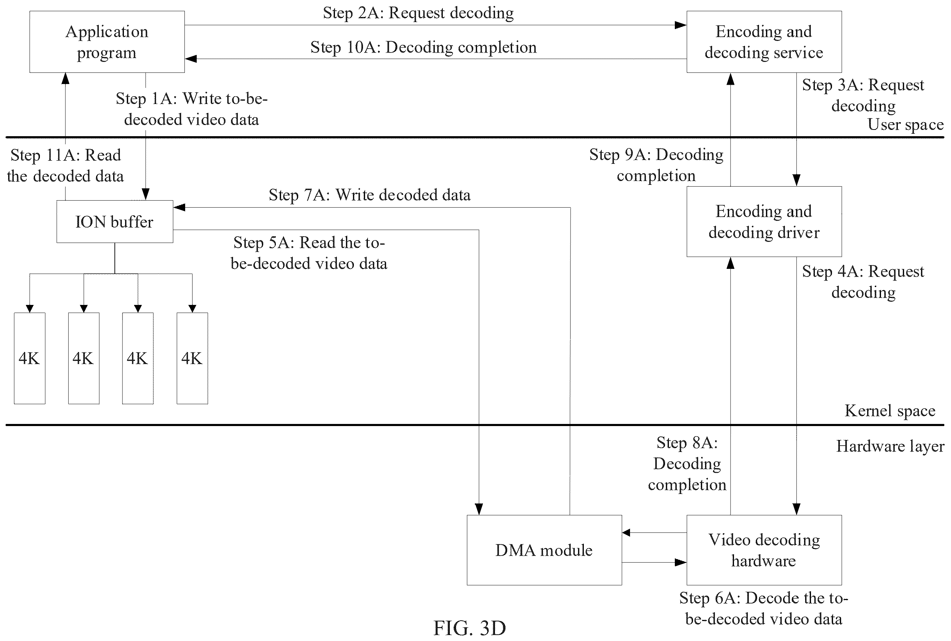

FIG. 3D shows a process in which after an ION driver allocates a same physical memory to an application program and video decoding hardware, and the application program, an encoding and decoding service, an encoding and decoding driver, and an IOMMU driver perform memory mapping on the shared physical memory, the application program and the video decoding hardware access the physical memory.

Step 1A: The application program writes to-be-decoded video data into the physical memory.

In this embodiment of this application, the application program accesses the physical memory, and an MMU may translate a first virtual address into a physical address of the physical memory, so that the application program accesses the physical memory, to write the to-be-decoded video data.

Step 2A: The application program requests decoding from the encoding and decoding service.

Step 3A: The encoding and decoding service requests decoding from the encoding and decoding driver.

Step 4A: The encoding and decoding driver requests decoding from the video decoding hardware.

Step 5A: A DMA module reads the to-be-decoded video data from the physical memory.

In this embodiment of this application, the video decoding hardware accesses the physical memory, and the DMA module may translate a second virtual address into the physical address of the physical memory, so that the DMA module reads the to-be-decoded video data from the physical memory.

Step 6A: The video decoding hardware decodes the to-be-decoded video data to obtain decoded data.

Step 7A: The DMA module writes the decoded data into the physical memory.

Step 8A: The video decoding hardware feeds back decoding completion to the encoding and decoding driver.

Step 9A: The encoding and decoding driver feeds back decoding completion to the encoding and decoding service.

Step 10A: The encoding and decoding service feeds back decoding completion to the application program.

Step 11A: The application program reads the decoded data from the physical memory.

In this embodiment of this application, the application program accesses the physical memory, and the MMU may translate the first virtual address into the physical address of the physical memory, so that the application program accesses the physical memory, to read the decoded data. After obtaining the decoded data, the application program may play a video based on the decoded data.

The memory processing method provided in embodiments of this application is described below with reference to specific embodiments. The following several embodiments may be combined with each other. For same or similar concepts or processes, details may not be described in some embodiments.

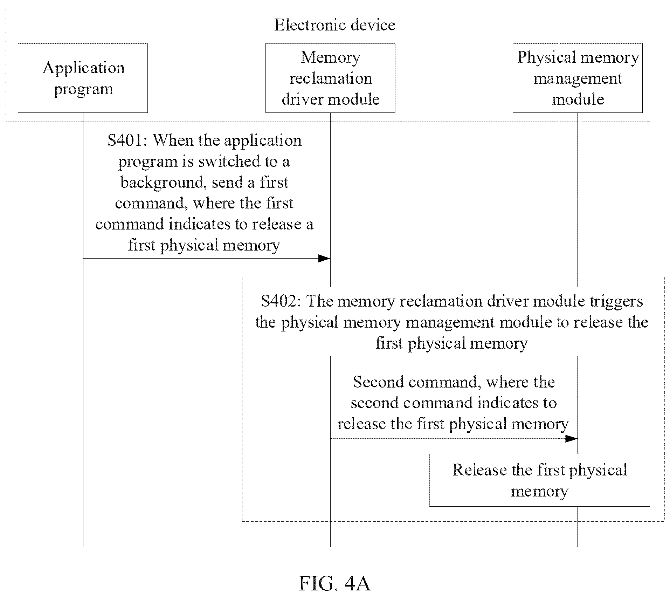

FIG. 4A is a schematic flowchart of an embodiment of a memory processing method according to an embodiment of this application. Refer to FIG. 4A. The memory processing method provided in this embodiment of this application may include the following steps.

S401: When an application program is switched to a background, the application program sends a first command to a memory reclamation driver module, where the first command indicates to release a first physical memory.

When the application program is switched to the background, the application program may suspend execution of a target service, and the application program temporarily does not need to use the first physical memory corresponding to the target service. The first physical memory may be considered as a physical memory allocated by an operating system (or a physical memory management module in the operating system) to the target service of the application program, and the first physical memory may be configured to store data associated with the target service.

In some embodiments, when the application program is switched to the background, the application program may send the first command to the memory reclamation driver module, where the first command indicates to release the first physical memory. Specifically, the first command indicates to release the first physical memory corresponding to the target service of the application program.

For example, the application program is a video play application, and the video play application is playing a video. When the video play application is switched to the background, the video play application may suspend video playing. The target service may be understood as a video play service. Correspondingly, in a scenario in which the video play application and video decoding hardware share the first physical memory, the video play service corresponds to the first physical memory. The first physical memory may be configured to store data associated with the video play service. The data associated with the video service may include to-be-decoded video data and decoded data. When the video play application is switched to the background, the video play application may suspend execution of the video play service. Therefore, the video play application does not need to access data (for example, the decoded data) in the first physical memory. Therefore, the video play application may send the first command to the memory reclamation driver module to indicate to release the first physical memory.

In some embodiments, when the application program is switched to the background, the application program may suspend execution of the target service, and the application program may send the first command to the memory reclamation driver module after completely reading the data associated with the target service in the first physical memory.

In some embodiments, the first command may include an identifier of the first physical memory, and the identifier of the first physical memory indicates the first physical memory. For example, the identifier of the first physical memory may be an identifier of an ION buffer configured to record information about the first physical memory, for example, an FD of the ION buffer.

In some embodiments, when different application programs are switched to the background, the application programs may suspend execution of different target services. In this embodiment of this application, when different application programs are switched to the background, specific target services whose execution is to be suspended may be preconfigured in the application programs. In this way, when the application program is switched to the background, the target service whose execution is to be suspended may be determined, so that the application program may determine the identifier of the first physical memory, to send the first command to the memory reclamation driver module.

S402: The memory reclamation driver module triggers a physical memory management module to release the first physical memory.

The physical memory management module is configured to manage a physical memory.

In response to the first command, the memory reclamation driver module may determine the identifier of the first physical memory, such as the identifier of the ION buffer configured to record the information about the first physical memory, for example, FD1.

In some embodiments, the memory reclamation driver module may send a second command to the physical memory management module, where the second command indicates to release the first physical memory, and the second command may include the identifier of the first physical memory, for example, FD1. The physical memory management module may query, in response to the second command, the ION buffer corresponding to FD1. Because the ION buffer records the information about the first physical memory, the physical memory management module may determine the first physical memory based on the information about the first physical memory, so as to release the first physical memory. It should be understood that FIG. 4A shows steps in which the memory reclamation driver module sends the second command to the physical memory management module, and the physical memory management module releases the first physical memory.

In this embodiment of this application, in a scenario in which the application program and a hardware device share the first physical memory, when the application program is switched to the background and temporarily does not need to use the first physical memory, the application program may actively request to release the first physical memory. In this way, an available memory of an electronic device can be increased, and the released first physical memory may be allocated to another service for use, thereby improving memory usage.

In some embodiments, when the application program is switched to the background, execution of the target service may be suspended. Therefore, the application program does not access the first virtual address corresponding to the target service. However, after releasing the first physical memory corresponding to the target service, the physical memory management module may allocate the first physical memory to a service of another application program for use, and therefore the first physical memory may store data associated with the service of the another application program. To avoid a data security problem caused when the application program switched to the background can still access the first physical memory, the hardware device can still access the first physical memory, and a kernel space (for example, an encoding and decoding service in the kernel space) can still access the first physical memory, in this embodiment of this application, the memory reclamation driver module may further modify a first page table, a second page table, and a third page table, to remove a mapping relationship between a first physical address and the first virtual address, a mapping relationship between the first physical address and a second virtual address, and a mapping relationship between the first physical address and a fourth virtual address.

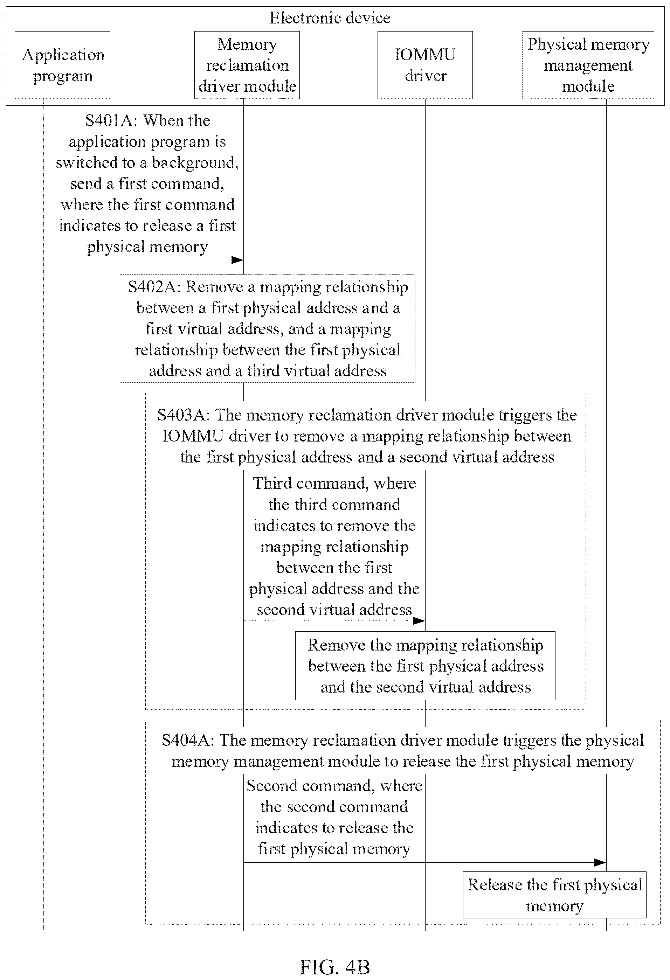

Refer to FIG. 4B. The memory processing method provided in this embodiment of this application may include the following steps.

S401A: When an application program is switched to a background, the application program sends a first command to a memory reclamation driver module, where the first command indicates to release a first physical memory.

For S401A, refer to the descriptions in S401.

S402A: The memory reclamation driver module removes a mapping relationship between a first physical address and a first virtual address, and a mapping relationship between the first physical address and a third virtual address.

In this embodiment of this application, in response to the first command, the memory reclamation driver module may determine an identifier of the first physical memory, for example, FD1. The memory reclamation driver module may access, based on FD1, an ION buffer whose identifier is FD1. Because the ION buffer records the first virtual address mapped to the first physical memory, the memory reclamation driver module may determine a mapping relationship between the first physical memory and the first virtual address.

A first page table may store the mapping relationship between the first physical address and the first virtual address. The memory reclamation driver module may modify the first page table, to remove the mapping relationship between the first physical address and the first virtual address.

In some embodiments, after the memory reclamation driver module determines the first virtual address, the memory reclamation driver module may modify, in the first page table, the first physical address to which the first virtual address is mapped. For example, the memory reclamation driver module may modify the first physical address to which the first virtual address is mapped to null, or modify the first physical address to a preset physical address. A value in the preset physical address may be a preset value. For example, if the preset value is 0, the memory reclamation driver module may fill the first physical address to which the first virtual address is mapped in the first page table with 0.

In some embodiments, because the ION buffer records a fourth virtual address of a user space (for example, an encoding and decoding service in the user space) mapped to the first physical memory, the memory reclamation driver module may determine a mapping relationship between the first physical memory and the fourth virtual address. In addition, the first page table may store the mapping relationship between the first physical address and the fourth virtual address. The memory reclamation driver module may modify the first page table, to remove the mapping relationship between the first physical address and the fourth virtual address. For example, the memory reclamation driver module may modify, in the first page table, the first physical address to which the fourth virtual address is mapped.

Similarly, because the ION buffer records a third virtual address of a kernel space mapped to the first physical memory, the memory reclamation driver module may determine a mapping relationship between the first physical memory and the third virtual address.

A third page table may store the mapping relationship between the first physical address and the third virtual address. The memory reclamation driver module may modify the third page table, to remove the mapping relationship between the first physical address and the third virtual address.

In some embodiments, after the memory reclamation driver module determines the third virtual address, the memory reclamation driver module may modify, in the third page table, the first physical address to which the third virtual address is mapped. For example, the memory reclamation driver module may modify the first physical address to which the third virtual address is mapped to null, or modify the third physical address to the preset physical address.

In conclusion, the memory reclamation driver module may modify the first page table, to remove the mapping relationship between the first virtual address and the first physical address, and the mapping relationship between the fourth virtual address and the first physical address. In addition, the memory reclamation driver module may modify the third page table, to remove the mapping relationship between the third virtual address and the first physical address.

It may be understood that, in this embodiment of this application, a video decoding scenario is used as an example. In a video encoding and decoding process, the encoding and decoding service in the user space and an encoding and decoding driver in the kernel space need to be used. In some embodiments, the encoding and decoding service may be used as a service, and the encoding and decoding driver may be used as a service driver. It may be understood that, in another service scenario, a service in the user space or a service driver in the kernel space may not be used, or the service or the service driver may not perform memory mapping on the shared physical memory, and an ION driver does not record, in the ION buffer, the third virtual address and the fourth virtual address that are mapped to the physical memory.

It may be understood that when the service driver in the kernel space does not perform memory mapping on the shared physical memory, the ION driver does not record, in the ION buffer, the third virtual address mapped to the physical memory. Correspondingly, the third page table may not record a mapping relationship between the third virtual address and a physical address of the physical memory, and the memory reclamation driver module does not modify the third page table. Similarly, when the service in the user space does not perform memory mapping on the shared physical memory, the ION driver does not record, in the ION buffer, the fourth virtual address mapped to the physical memory. Correspondingly, the first page table does not record a mapping relationship between the fourth virtual address and the physical address of the physical memory, and the memory reclamation driver module does not modify the mapping relationship.

S403A: The memory reclamation driver module triggers an IOMMU driver to remove a mapping relationship between the first physical address and a second virtual address.

In some embodiments, a sequence between S402A and S403A is not limited.

In this embodiment of this application, in response to the first command, the memory reclamation driver module may determine the identifier of the first physical memory, for example, FD1. The memory reclamation driver module may access, based on FD1, the ION buffer whose identifier is FD1. In addition to recording that the first virtual address is mapped to the first physical memory, the ION buffer may further record that the second virtual address is mapped to the first physical memory. Therefore, the memory reclamation driver module may determine the mapping relationship between the first physical memory and the second virtual address.

A second page table may store the mapping relationship between the first physical address and the second virtual address. In this embodiment of this application, the memory reclamation driver module may trigger the IOMMU driver to remove the mapping relationship between the first physical address and the second virtual address. In some embodiments, the memory reclamation driver module may send a third command to the IOMMU driver, where the third command indicates the IOMMU driver to remove the mapping relationship between the first physical address and the second virtual address. In some embodiments, the third command may include the second virtual address.

In some embodiments, the IOMMU driver may modify, in the second page table, the first physical address to which the second virtual address is mapped. For example, the IOMMU modifies the first physical address to which the second virtual address is mapped to null, or modifies the first physical address to the preset physical address. A value in the preset physical address may be a preset value. For example, if the preset value is 0, the IOMMU driver may fill the first physical address to which the second virtual address is mapped in the second page table with 0.

In some embodiments, a physical address to which the first virtual address is mapped in a modified first page table may be different from a physical address to which the second virtual address is mapped in a modified second page table.

S404A: The memory reclamation driver module triggers a physical memory management module to release the first physical memory.

For S404A, refer to the descriptions in S402.

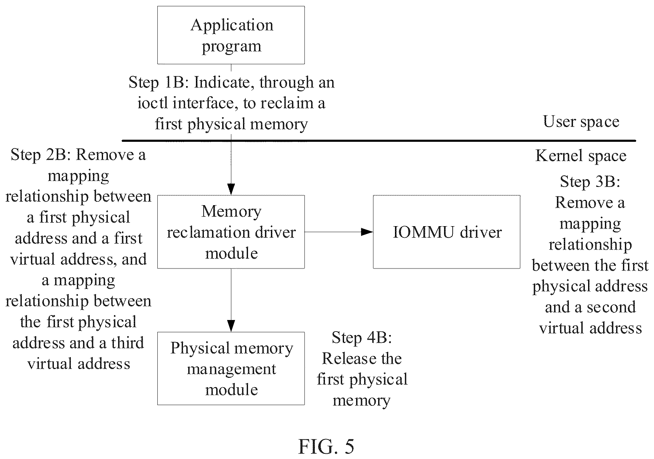

FIG. 5 is a schematic flowchart of another embodiment of a memory processing method according to an embodiment of this application. Refer to FIG. 5. The memory processing method may include the following steps.

Step 1B: When being switched to a background, an application program indicates, through an ioctl interface, a memory reclamation driver module to reclaim a first physical memory.

Step 2B: The memory reclamation driver module modifies a first page table, to remove a mapping relationship between a first physical address and a first virtual address and a mapping relationship between the first physical address and a third virtual address.

Step 3B: An IOMMU driver modifies a second page table, to remove a mapping relationship between the first physical address and a second virtual address.

Step 4B: A physical memory management module releases the first physical memory.

For step 1B to step 4B, refer to the descriptions in FIG. 4A and FIG. 4B.

In this embodiment of this application, when the application program is switched to the background, the memory reclamation driver module may remove the mapping relationship between the first physical address and the first virtual address, and the mapping relationship between the first physical address and the third virtual address, and the IOMMU driver may remove the mapping relationship between the first physical address and the second virtual address, to avoid a problem that the application program switched to the background, a hardware device, and a service driver in a kernel space can still access the first physical memory after the physical memory management module releases the first physical memory, thereby improving data security.

After the physical memory management module releases the first physical memory, when the application program is switched to a foreground, the application program may continue to perform a target service, and the application program needs to continue to access data in the first physical memory. For example, in a video decoding scenario, when a video play application is switched to the background, the physical memory management module may release a physical memory corresponding to a video play service, and an operating system may allocate the physical memory to a service of another application program for use. When the video play application is switched to the foreground, the video play application needs to continue to play a video, and the video play application needs to continue to access data (for example, decoded data) associated with the target service, to play the video.

In some embodiments, when the application program is switched to the background, the application program sends a first command to the memory reclamation driver module, and the application program may not completely read the data associated with the target service in the first physical memory. Therefore, to ensure that the application program can still access the data associated with the target service after the physical memory management module releases the first physical memory, the physical memory management module may copy the data stored in the first physical memory to a hard disk before releasing the first physical memory.

When the application program is switched to the foreground and needs to continue to access the data associated with the target service, the physical memory management module may reallocate a second physical memory to the target service of the application program, and copy the data associated with the target service and stored in the hard disk to the second physical memory. In this way, the application program may continue to access the data associated with the target service in the second physical memory, and continue to perform the target service.

In some embodiments, when the application program is switched to the background, the application program may send the first command to the memory reclamation driver module after completely reading the data associated with the target service in the first physical memory. In this example, because the application program has completely read the data associated with the target service from the first physical memory, when the application program is switched to the foreground, the application program may continue to perform the target service based on the read data associated with the target service. In this example, before releasing the physical memory corresponding to the target service, the physical memory management module may not need to copy the data stored in the first physical memory to the hard disk, thereby reducing content copying.

In this embodiment of this application, when the application program is switched to the foreground, the application program may continue to perform the target service, and the physical memory management module may reallocate the shared second physical memory to the application program and the hardware device, so that the application program may continue to write data into and/or read data from the second physical memory, and the hardware device may continue to write data into and/or read data from the second physical memory.

In some embodiments, an address of the second physical memory may be referred to as a second physical address, and a size of the second physical memory is equal to a size of the first physical memory.

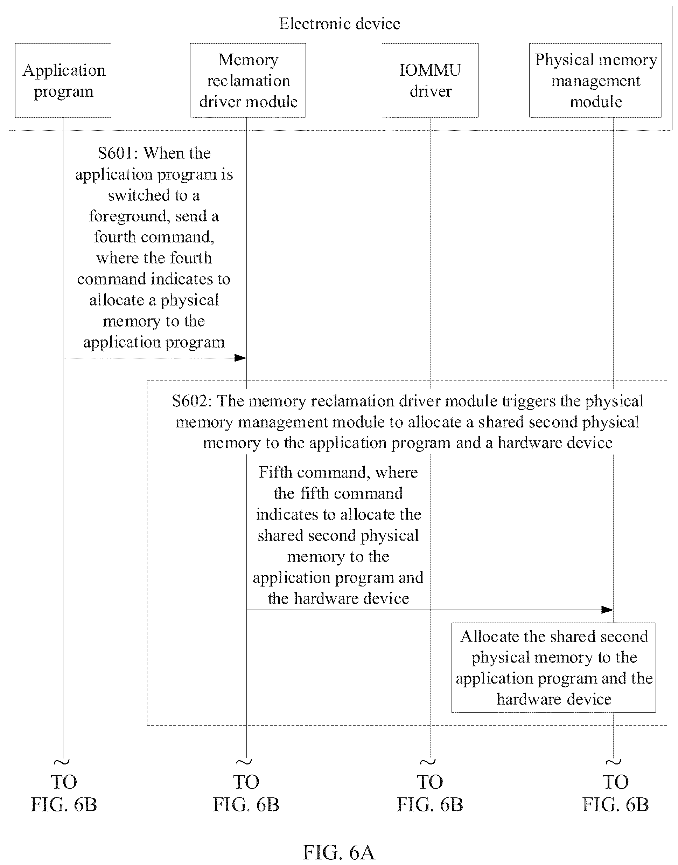

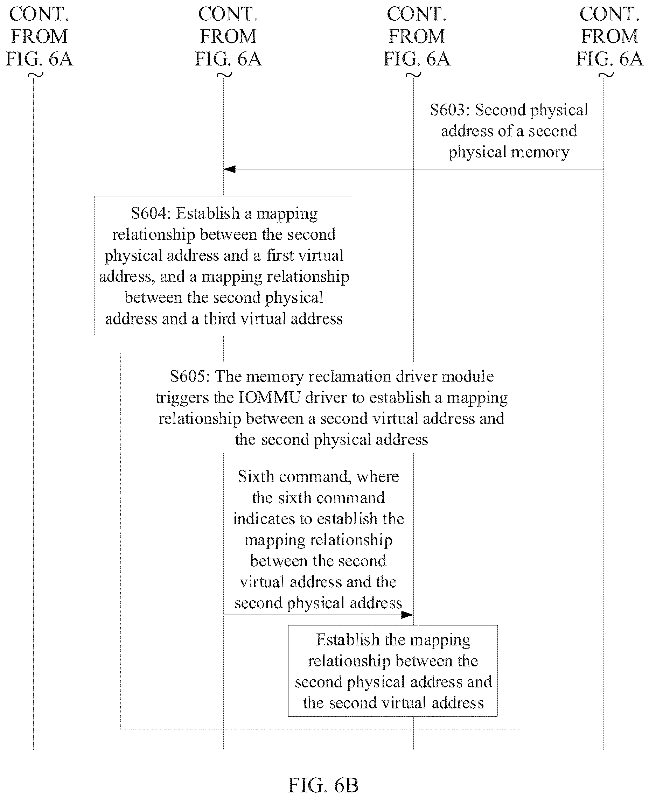

The following describes a process in which a physical memory management module reallocates a second physical memory to a target service of an application program. Refer to FIG. 6A and FIG. 6B. A memory processing method provided in an embodiment of this application may include the following steps.

S601: When the application program starts to be switched from a background to a foreground, the application program sends a fourth command to a memory reclamation driver module, where the fourth command indicates to allocate a physical memory to the application program.

After the application program is switched to the foreground, the application program may continue to perform the target service, and the application program needs to continue to access data associated with the target service. Therefore, an operating system needs to reallocate the second physical memory to the target service of the application program. The second physical memory is configured to store the data associated with the target service. In this embodiment of this application, when the application program starts to be switched from the background to the foreground, the application program may send the fourth command to the memory reclamation driver module, where the fourth command indicates to allocate a physical memory to the application program.

In some embodiments, a user may perform a first operation to trigger to switch the application program from the background to the foreground. In response to the first operation, the application program sends the fourth command to the memory reclamation driver module when starting to be switched from the background to the foreground.

In some embodiments, the fourth command may include an identifier of a first physical memory, for example, FD1.

S602: The memory reclamation driver module triggers the physical memory management module to allocate the shared second physical memory to the application program and a hardware device.

In response to the fourth command, the memory reclamation driver module may access an ION buffer corresponding to FD1, and determine information such as a size of the first physical memory. The memory reclamation driver module may trigger the physical memory management module to allocate the second physical memory of the same size to the application program.

In some embodiments, the memory reclamation driver module may send a fifth command to the physical memory management module, where the fifth command indicates the physical memory management module to reallocate the shared second physical memory to the application program and the hardware device. In some embodiments, the fifth command may include information such as a size of the second physical memory.

S603: The physical memory management module feeds back a second physical address of the second physical memory to the memory reclamation driver module.

In response to the fifth command, the physical memory management module may allocate the shared second physical memory to the application program and the hardware device, where an address of the second physical memory may be referred to as the second physical address. The physical memory management module may feed back the second physical address to the memory reclamation driver module.

S604: The memory reclamation driver module establishes a mapping relationship between a first virtual address and the second physical address and a mapping relationship between a third virtual address and the second physical address.

The memory reclamation driver module may modify a first page table, to establish the mapping relationship between the second physical address and the first virtual address. In some embodiments, the memory reclamation driver module may modify, in the first page table, a physical address to which the first virtual address is mapped. For example, the memory reclamation driver module modifies a preset physical address to which the first virtual address is mapped to the second physical address.

In some embodiments, the memory reclamation driver module modifies, in the first page table, a first physical address to which a fourth virtual address is mapped. After the physical memory management module reallocates the shared second physical memory to the application program and the hardware device, the memory reclamation driver module may modify, in the first page table, the physical address to which the fourth virtual address is mapped. For example, the memory reclamation driver module modifies the preset physical address to which the fourth virtual address is mapped to the second physical address.

Similarly, the memory reclamation driver module may modify a third page table, to establish the mapping relationship between the second physical address and the third virtual address. In some embodiments, the memory reclamation driver module may modify, in the third page table, a physical address to which the third virtual address is mapped. For example, the memory reclamation driver module modifies a preset physical address to which the third virtual address is mapped to the second physical address.

S605: The memory reclamation driver module triggers an IOMMU driver to establish a mapping relationship between a second virtual address and the second physical address.

In some embodiments, a sequence between S604 and S605 is not limited.

Similarly, the memory reclamation driver module may trigger the IOMMU driver to establish the mapping relationship between the second virtual address and the second physical address. In some embodiments, the memory reclamation driver module may send a sixth command to the IOMMU driver, where the sixth command indicates the IOMMU driver to establish the mapping relationship between the second virtual address and the second physical address. The sixth command may include the second physical address.

In some embodiments, in response to the sixth command, the IOMMU driver may modify, in a second page table, a physical address to which the second virtual address is mapped. For example, the IOMMU driver may modify the physical address to which the second virtual address is mapped to the second physical address.

In this way, the physical memory management module may reallocate the shared second physical memory to the application program and the hardware device, the memory reclamation driver module stores the mapping relationship between the first virtual address and the second physical address in the first page table, and the IOMMU driver stores the mapping relationship between the second virtual address and the second physical address in the second page table. Therefore, when the application program accesses the second physical memory, an MMU may query the first page table, and translate the first virtual address into the second physical address, so that the application program accesses the second physical memory. In addition, when the hardware device accesses the second physical memory, the IOMMU may query the second page table, and translate the second virtual address into the second physical address, so that the hardware device accesses the second physical memory.

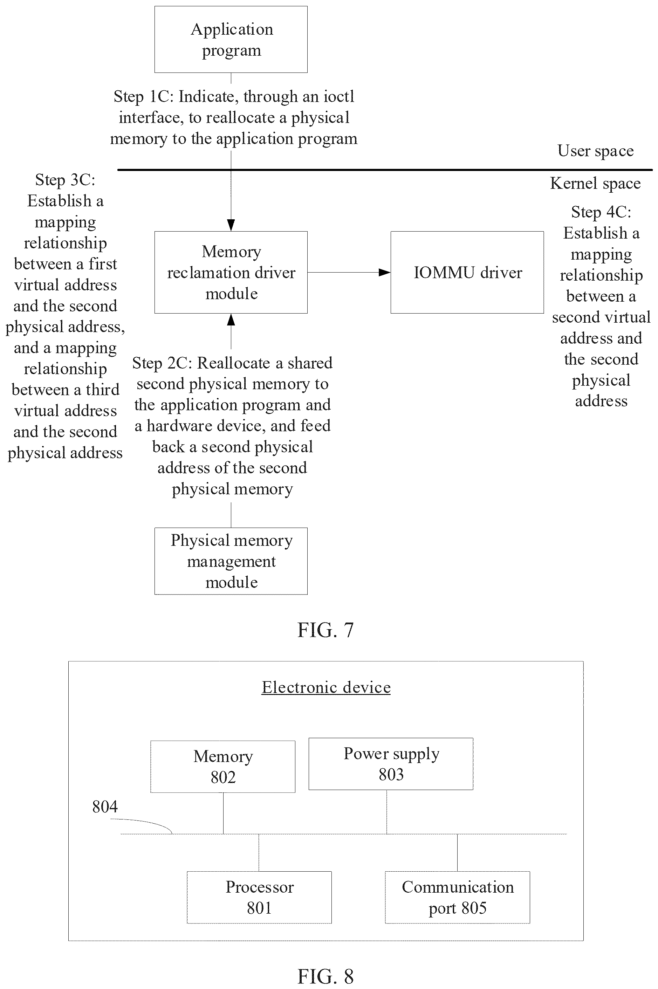

FIG. 7 is another schematic flowchart a memory processing method according to an embodiment of this application. Refer to FIG. 7. The memory processing method may include the following steps.

Step 1C: When starting to be switched from a background to a foreground, an application program indicates, through an ioctl interface, a memory reclamation driver module to reallocate a physical memory to the application program.

Step 2C: An ION driver reallocates a shared second physical memory to the application program and a hardware device, and feeds back a second physical address of the second physical memory to the memory reclamation driver module.

Step 3C: The memory reclamation driver module modifies a first page table, to establish a mapping relationship between a first virtual address and the second physical address, and the memory reclamation driver module modifies a third page table, to establish a mapping relationship between a third virtual address and the second physical address.

Step 4C: An IOMMU module modifies a second page table, to establish a mapping relationship between a second virtual address and the second physical address.

For step 1C to step 4C, refer to the descriptions in FIG. 6A and FIG. 6B.

In this embodiment of this application, when starting to be switched from the background to the foreground, the application program may request the memory reclamation driver module to reallocate the shared second physical memory to the application program and the hardware device. The memory reclamation driver module may trigger a physical memory management module to allocate the shared second physical memory to the application program and the hardware device. The memory reclamation driver module may modify the first page table to establish the mapping relationship between the first virtual address and the second physical address. The memory reclamation driver module may modify the third page table to establish the mapping relationship between the third virtual address and the second physical address. In addition, the IOMMU driver may modify the second page table to establish the mapping relationship between the second virtual address and the second physical address. In this way, the application program, the hardware device, and a kernel space can continue to access data associated with a target service in the second physical memory, and the application program can continue to perform the target service. The memory processing method provided in this embodiment of this application does not affect execution of the target service.

It should be noted that data (including but not limited to data used for analysis, stored data, displayed data, and the like) in this application are information and data that is authorized by a user or fully consented by parties, and the collection, use, and processing of related data need to comply with related laws, regulations, and standards of related countries and regions. Corresponding operation entries are provided for the user to choose to authorize or deny.

In an embodiment, an embodiment of this application further provides an electronic device, and the electronic device may perform the steps in the foregoing embodiments. Refer to FIG. 8. The electronic device may include a processor 801 (for example, a CPU) and a memory 802. The memory 802 may include a high-speed random access memory (random access memory, RAM), and may further include a non-volatile memory (non-volatile memory, NVM), for example, at least one disk memory. The memory 802 may store various instructions, to complete various processing functions and implement the method steps of this application.

Optionally, the electronic device in this application may further include a power supply 803, a communication bus 804, and a communication port 805. The communication port 805 is configured to implement connection and communication between the electronic device and another peripheral. In this embodiment of this application, the memory 802 is configured to store computer-executable program code. The program code includes instructions. When the processor 801 executes the instructions, the instructions cause the processor 801 of the electronic device to perform the actions in the foregoing method embodiments. Implementation principles and technical effects thereof are similar. Details are not described herein again.

It should be noted that the modules or components in the foregoing embodiments may be configured as one or more integrated circuits for implementing the foregoing methods, for example, one or more application-specific integrated circuits (application-specific integrated circuit, ASIC), one or more digital signal processors (digital signal processor, DSP), or one or more field programmable gate arrays (field programmable gate array, FPGA). For another example, when one of the foregoing modules is implemented in a form in which a processing element schedules program code, the processing element may be a general-purpose processor, for example, a central processing unit (central processing unit, CPU) or another processor that can invoke the program code, for example, a controller. For another example, the modules may be integrated together and implemented in a form of a system-on-a-chip (system-on-a-chip, SoC).

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk, or a magnetic tape), an optical medium (for example, a DVD), a semi-conductor medium (for example, a solid state disk Solid State Disk (SSD)), or the like.

In embodiments of this application, "at least one" refers to one or more, and "a plurality of" refers to two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. "At least one of the following items (pieces)" or a similar expression thereof refers to any combination of these items, including a single item (piece) or any combination of a plurality of items (pieces). In addition, it should be understood that in the descriptions of this application, words such as "first" and "second" are merely used for distinguishing, and cannot be understood as an indication or implication of relative importance or an indication or implication of a sequence.

It should be noted that "when..." in embodiments of this application may be an instant when a case occurs, or may be a period of time after a case occurs. This is not specifically limited in embodiments of this application. It may be understood that various numbers in embodiments of this application are merely used for differentiation for ease of description, and are not used to limit the scope of embodiments of this application.

It may be understood that in embodiments of this application, sequence numbers of processes do not mean a sequence of execution. The sequence of execution of the processes should be determined according to functions and internal logic of the processes, and should not constitute any limitation on an implementation process of embodiments of this application.

## Claims

1. A memory processing method, applied to a memory processing apparatus, wherein the method comprises:
receiving a first command from an application program, wherein the first command indicates to release a first physical memory of the application program, the first command is sent when the application program is switched to a background, and the application program and a hardware device share the first physical memory; and
releasing the first physical memory.

2. The method according to claim 1, wherein a first page table comprises a mapping relationship between a first physical address and a first virtual address, a second page table comprises a mapping relationship between the first physical address and a second virtual address, the first physical address is a physical address of the first physical memory, the first virtual address is a virtual address in a virtual address space of the application program, and the second virtual address is a virtual address in a virtual address space of the hardware device; and
before releasing the first physical memory, the method further comprises:
modifying the first physical address to which the first virtual address is mapped in the first page table; and
modifying the first physical address to which the second virtual address is mapped in the second page table.

3. The method according to claim 2, wherein modifying the first physical address to which the first virtual address is mapped in the first page table comprises:
modifying the first physical address to a preset physical address; and
modifying the first physical address to which the second virtual address is mapped in the second page table comprises:
modifying the first physical address to the preset physical address.

4. The method according to claim 2 or 3, wherein the method further comprises:
receiving a fourth command from the application program, wherein the fourth command indicates to reallocate a shared physical memory to the application program and the hardware device, and the fourth command is sent when the application program starts to be switched from the background to a foreground;
allocating a shared second physical memory to the application program and the hardware device, wherein a physical address of the second physical memory is a second physical address;
modifying the physical address to which the first virtual address is mapped in the first page table to the second physical address; and
modifying the physical address to which the second virtual address is mapped in the second page table to the second physical address.

5. The method according to any one of claims 2 to 4, wherein a third page table comprises a mapping relationship between the first physical address and a third virtual address, the third virtual address is a virtual address of a service driver in a kernel space, and before releasing the first physical memory, the method further comprises:
modifying the first physical address to which the third virtual address is mapped in the third page table; and
after allocating the shared second physical memory to the application program and the hardware device, the method further comprises:
modifying the physical address to which the third virtual address is mapped in the third page table to the second physical address.

6. The method according to any one of claims 2 to 5, wherein the first command comprises an identifier of the first physical memory.

7. The method according to claim 6, wherein the identifier of the first physical memory is an identifier of a buffer configured to record information about the first physical memory.

8. The method according to claim 7, wherein the memory processing apparatus comprises a memory reclamation driver module and a physical memory management module;
receiving the first command from the application program comprises:
receiving, by the memory reclamation driver module, the first command from the application program; and
releasing the first physical memory comprises:
sending, by the memory reclamation driver module, a second command to the physical memory management module, wherein the second command indicates to release the first physical memory; and
releasing, by the physical memory management module, the first physical memory.

9. The method according to claim 8, wherein the memory processing apparatus further comprises an input/output memory management unit IOMMU driver, and the buffer is further configured to record the first virtual address and the second virtual address that are mapped to the first physical memory;
modifying the first physical address to which the first virtual address is mapped in the first page table comprises:
obtaining, by the memory reclamation driver module based on the identifier of the buffer, the first virtual address and the second virtual address that are mapped to the first physical memory; and
modifying the first physical address to which the first virtual address is mapped in the first page table; and
modifying the first physical address to which the second virtual address is mapped in the second page table comprises:
sending, by the memory reclamation driver module, a third command to the IOMMU driver, wherein the third command indicates to modify the first physical address to which the second virtual address is mapped in the second page table; and
modifying, by the IOMMU driver, the first physical address to which the second virtual address is mapped in the second page table.

10. The method according to claim 9, wherein modifying the first physical address to which the third virtual address is mapped in the third page table comprises:
obtaining, by the memory reclamation driver module based on the identifier of the buffer, the third virtual address mapped to the first physical memory; and
modifying the first physical address to which the third virtual address is mapped in the third page table.

11. The method according to claim 10, wherein receiving the fourth command from the application program comprises:
receiving, by the memory reclamation driver module, the fourth command from the application program;
allocating the shared second physical memory to the application program and the hardware device comprises:
sending, by the memory reclamation driver module, a fifth command to the physical memory management module, wherein the fifth command indicates to allocate a shared physical memory to the application program and the hardware device;
allocating, by the physical memory management module, the shared second physical memory to the application program and the hardware device; and
sending, by the physical memory management module, the second physical address of the second physical memory to the memory reclamation driver module;
modifying the physical address to which the first virtual address is mapped in the first page table to the second physical address comprises:
modifying, by the memory reclamation driver module, the physical address to which the first virtual address is mapped in the first page table to the second physical address;
modifying the physical address to which the second virtual address is mapped in the second page table to the second physical address comprises:
sending, by the memory reclamation driver module, a sixth command to the IOMMU driver, wherein the sixth command indicates to modify the physical address to which the second virtual address is mapped in the second page table to the second physical address; and
modifying, by the IOMMU driver, the physical address to which the second virtual address is mapped in the second page table to the second physical address; and
modifying the physical address to which the third virtual address is mapped in the third page table to the second physical address comprises:
modifying, by the memory reclamation driver module, the physical address to which the third virtual address is mapped in the third page table to the second physical address.

12. The method according to any one of claims 1 to 11, wherein the memory processing apparatus is located in the kernel space of an electronic device.

13. A memory processing method, applied to an electronic device, wherein the electronic device comprises an application program and a memory processing apparatus, and the method comprises:
when the application program is switched to a background, sending, by the application program, a first command to the memory processing apparatus, wherein the first command indicates to release a first physical memory of the application program, and the application program and a hardware device share the first physical memory; and
releasing, by the memory processing apparatus, the first physical memory in response to the first command.

14. The method according to claim 13, wherein a first page table comprises a mapping relationship between a first physical address and a first virtual address, a second page table comprises a mapping relationship between the first physical address and a second virtual address, the first physical address is a physical address of the first physical memory, the first virtual address is a virtual address in a virtual address space of the application program, and the second virtual address is a virtual address in a virtual address space of the hardware device; and
before releasing, by the memory processing apparatus, the first physical memory, the method further comprises:
modifying, by the memory processing apparatus, the first physical address to which the first virtual address is mapped in the first page table, and modifying the first physical address to which the second virtual address is mapped in the second page table.

15. The method according to claim 14, wherein the method further comprises:
when the application program starts to be switched from the background to a foreground, sending, by the application program, a fourth command to the memory processing apparatus, wherein the fourth command indicates to reallocate a shared physical memory to the application program and the hardware device;
allocating, by the memory processing apparatus, a shared second physical memory to the application program and the hardware device, wherein a physical address of the second physical memory is a second physical address; and
modifying, by the memory processing apparatus, the physical address to which the first virtual address is mapped in the first page table to the second physical address, and modifying the physical address to which the second virtual address is mapped in the second page table to the second physical address.

16. The method according to claim 15, wherein a third page table comprises a mapping relationship between the first physical address and a third virtual address, the third virtual address is a virtual address of a service driver in a kernel space, and before releasing, by the memory processing apparatus, the first physical memory, the method further comprises:
modifying, by the memory processing apparatus, the first physical address to which the third virtual address is mapped in the third page table; and
after allocating, by the memory processing apparatus, the shared second physical memory to the application program and the hardware device, the method further comprises:
modifying, by the memory processing apparatus, the physical address to which the third virtual address is mapped in the third page table to the second physical address.

17. The method according to any one of claims 14 to 16, wherein the first command comprises an identifier of the first physical memory.

18. The method according to claim 17, wherein the identifier of the first physical memory is an identifier of a buffer configured to record information about the first physical memory.

19. The method according to claim 18, wherein the buffer is further configured to record the first virtual address and the second virtual address that are mapped to the first physical memory;
modifying, by the memory processing apparatus, the first physical address to which the first virtual address is mapped in the first page table, and modifying the first physical address to which the second virtual address is mapped in the second page table comprise:
obtaining, by the memory processing apparatus based on the identifier of the buffer, the first virtual address and the second virtual address that are mapped to the first physical memory; and
modifying, by the memory processing apparatus, the first physical address to which the first virtual address is mapped in the first page table, and modifying the first physical address to which the second virtual address is mapped in the second page table; and
modifying, by the memory processing apparatus, the first physical address to which the third virtual address is mapped in the third page table comprises:
obtaining, by the memory processing apparatus based on the identifier of the buffer, the third virtual address mapped to the first physical memory; and
modifying, by the memory processing apparatus, the first physical address to which the third virtual address is mapped in the third page table.

20. The method according to any one of claims 13 to 19, wherein the application program is located in a user space of the electronic device, and the memory processing apparatus is located in the kernel space of the electronic device.

21. A memory processing apparatus, comprising a module configured to perform the method according to any one of claims 1 to 12.

22. An electronic device, comprising an application program and the memory processing apparatus according to claim 21.

23. An electronic device, comprising a processor and a memory, wherein
the memory stores computer-executable instructions; and
the processor executes the computer-executable instructions stored in the memory, to enable the processor to perform the method according to any one of claims 1 to 20.

24. A computer-readable storage medium, wherein the computer-readable storage medium stores a computer program or instructions, and when the computer program or the instructions are run, the method according to any one of claims 1 to 20 is implemented.
